# EUROPÄISCHE PATENTSCHRIFT

(11) **EP 0 613 428 B1**
(45) Veröffentlichungstag und Bekanntmachung des Hinweises auf die Patenterteilung: **14.06.1995**
(21) Anmeldenummer: 92923761.8
(22) Anmeldetag: 20.11.1992
(51) Int. Cl.: B60R 16/02

(54) **BUSSYSTEM**
BUS SYSTEM
SYSTEME DE BUS

(30) Priorität: 26.11.1991 EP 91120166
(43) Veröffentlichungstag der Anmeldung: 07.09.1994
(73) Patentinhaber: SIEMENS AKTIENGESELLSCHAFT, 80333 München (DE)
(72) Erfinder: LOIBL, Josef, D-94209 Regen (DE)
(86) Internationale Anmeldenummer: EP9202676
(87) Internationale Veröffentlichungsnummer: WO9311002

(56) Entgegenhaltungen:
- WO-A-91/17069
- US-A- 4 825 362
- CONFERENCE PROCEEDINGS C205/85 I. MECH.E 1985 , PAGE 227 -230 WIRINGSYSTEM

## Beschreibung

Die Erfindung betrifft ein Bussystem nach dem Oberbegriff von Anspruch 1. Durch ein solches Bussystem sind mehrere Steuergeräte verbunden, die untereinander Daten austauschen müssen. Bei einem Einsatz in einem Kraftfahrzeug sind solche Steuergeräte z.B. die Steuerung für ein Antiblockiersystem (ABS) und eine Antischlupfregelung (ASR), die Motorsteuerung, die elektronische Getriebesteuerung, die Airbag-Steuerung und dgl.

Ein bekanntes Bussystem ersetzt die immer umfangreicher werdenden Einzelverdrahtungs-Kabelbäume in Kraftfahrzeugen (Conference Proceedings C205/85 I. Mech.E 1985, page 227-230 'Proposal for an automotive multiplex wiring system'. Ein serieller Bus verbindet untereinander selbständige Steuergeräte (Motorsteuerung, Dashboard-Computer) sowie Module, die von einer Zentralsteuerung gesteuert werden. Diese steuert sämtliche Informations-Ein- und -Ausgaben und führt außerdem Sonderaufgaben (Zeitgabe, Datenspeicherung, Signalisierung) durch. Die über das Kraftfahrzeug verteilt angeordneten Module sind Schnittstelle zwischen Signaleingängen (Schalter, Sensoren) und -ausgängen (Treiberschaltungen für Lampen, Motoren und Aktoren) einerseits und dem Bus andererseits. Die Datenübertragung erfolgt immer über den Zentralrechner.

Benötigt eines der Steuergeräte Daten, die über längere Zeiträume ausgewertet werden, z.B. statistisch aufbereitete Daten, so muß es diese jeweils selbst nach individuell abgespeicherten Algorithmen berechnen. Dies ergibt einen großen Programmbedarf in dem einzelnen Steuergerät und führt deshalb häufig dazu, daß statistische Funktionen und Verfahren, z.B. Adaptionsverfahren, obwohl sie nützlich wären, nicht durchgeführt werden können.

Der Erfindung liegt die Aufgabe zugrunde, alle auf dem Bus verfügbarem Signale, zusätzliche wichtige Meßsignale und Zeitdaten zu verarbeiten und gegebenenfalls für eine Langzeitauswertung zu speichern. Diese Aufgabe wird durch ein Bussystem nach Anspruch 1 gelöst.

Zweckmäßige Weiterbildungen der Erfindung sind in den Unteransprüchen niedergelegt.

Die Vorteile der Erfindung liegen insbesondere darin, daß das Datenmodul des Bussystems nach frei vorgebbaren Verfahren und Methoden, z.B. auch nach Methoden der Fuzzy-Logik, statistische Daten generiert und sie als gemultiplexte Datenwörter zyklisch über den Bus ausgibt und somit allen angeschlossenen Geräten, den sogenannten Busteilnehmern, zur Verfügung stellt.

Ein Ausführungsbeispiel der Erfindung wird im folgenden anhand der Zeichnung erläutert. Es zeigen:
- Figur 1: ein Bussystem nach der Erfindung in schematischer Darstellung,
- Figur 2: ein Datenmodul des Bussystems nach Figur 1, als Blockdiagramm,
- figur 3: eine mögliche Struktur der auf dem Bus bereitgestellten Daten, und
- figur 4: eine sogenannte Kommunikationsmatrix für ein vorgegebenes Bussystem.

Ein Bussystem 1 schließt mehrere Steuergeräte 2 ein, die durch einen seriellen Bus 3 miteinander sind. Bekannte Beispiele eines solchen Busses sind der sog. Fahrzeugbus, der VAN-Bus und der CAN-Bus. An den Bus 3 ist auch ein Datenmodul 4 angeschlossen, das alle auf dem Bus anliegenden Daten sowie zusätzlich wichtige Meßwerte erfaßt, die ihm von verschiedenen Sensoren S in dem Kraftfahrzeug über Datenleitungen 7 geliefert werden. Aus diesen Daten und Meßwerten werden in dem Datenmodul 4, und zwar unter Berücksichtigung des Datums und der Uhrzeit, statistisch aufbereitet Daten ermittelt. Unter statistischer Aufbereitung von Daten wird hier das Erfassen von Daten und Meßwerten über einen vorgebbaren Zeitraum und das Erstellen von abgeleiteten Werten, z.B. Mittelwerten, aus diesen Daten verstanden.

Die statistischen Daten können wie erwähnt z.B. nach einem Verfahren der Fuzzy-Logik ermittelt werden. Sie sind für die Steuergeräte nützlich, sie können in ihnen für Adaptions- und Optimierungsverfahren eingesetzt werden. Sie sind aber zeitunkritisch, und zwar im Gegensatz zu den Meßsignalen für die einzelnen Steuergeräte und die von diesen ausgegebenen Steuersignale, deren Verarbeitung in Echtzeit erfolgen muß.

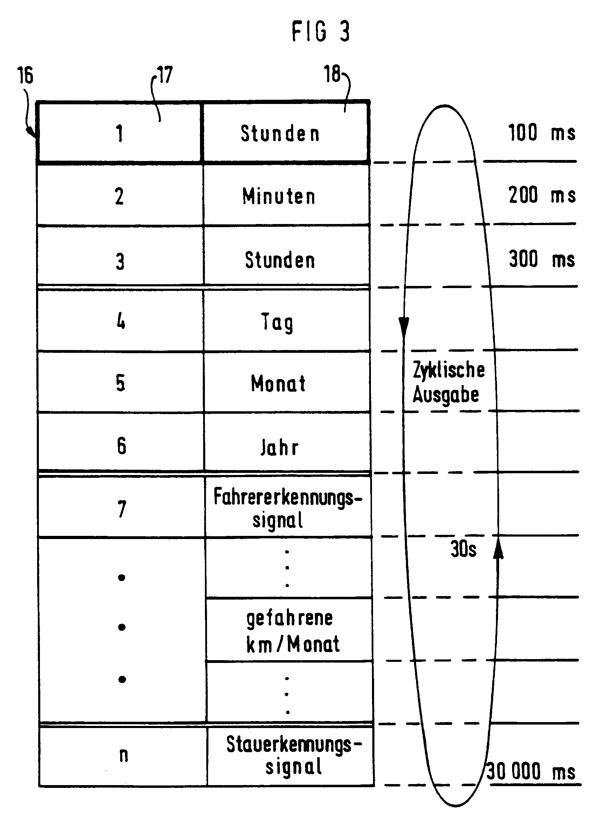

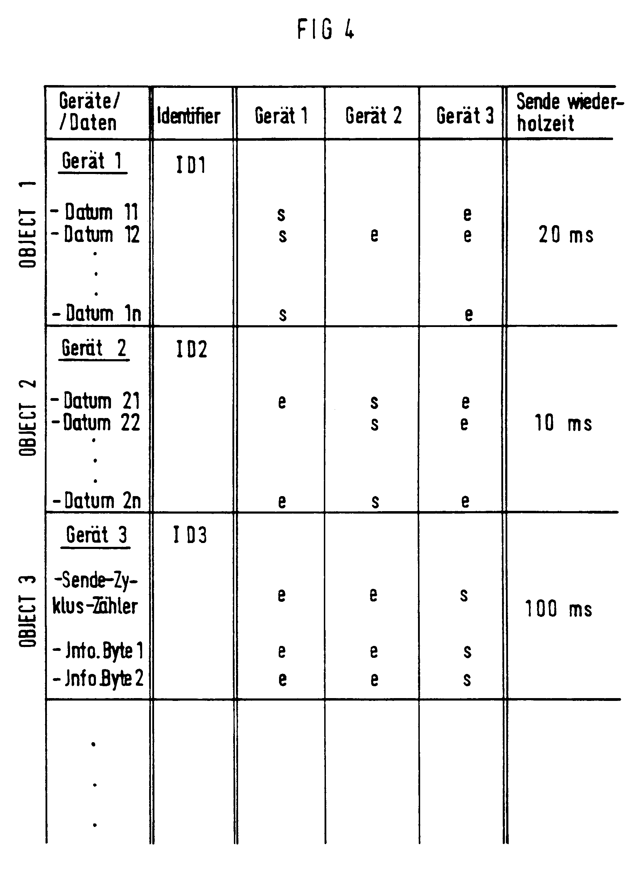

Die statistischen Daten werden von dem Datenmodul 4 als gemultiplexte Nachricht, d.h. in Form eines Zeitvielfachsignals auf dem Bus 3 zyklisch ausgegeben und damit sämtlichen Steuergeräten 2 zur Verfügung gestellt (vgl. auch die Beschreibung von Figur 3 und 4).

An das Bussystem 1 kann auch eine Anzeigeeinheit 5 angeschlossen sein, z.B. in Form eines optischen Displays oder eines Warngongs, über die Anzeigesignale ausgegeben werden, die von dem Datenmodul 4 aus den ausgewerteten Daten ermittelt werden.

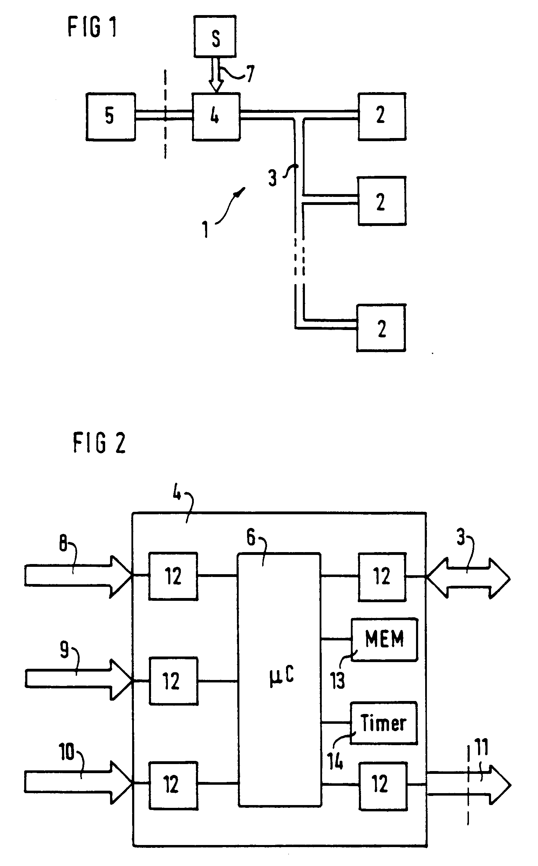

Das Datenmodul 4 (Figur 2) enthält eine Recheneinheit 6, z.B. einen Mikrorechner oder - kontroller, an den mehrere Ein- und Ausgangsleitungen angeschlossen sind. Über Leitungen 8, 9 und 10 gelangen digitale Eingangssignale, analoge Eingangssignale bzw. Frequenzsignale, z.B. von Drehzahlgebern, in den Datenmodul 4. Von dem Bus 3 gelangen alle auf ihm übertragenen Daten als Eingangssignale zu dem Datenmodul 4; die in dem Datenmodul ermittelten statistischen Nutzdaten werden über den Bus als gemultiplexte Ausgangssignale ausgesendet. Eine Leitung 11, die als Mehrfachleitung oder Bus ausgebildet sein kann, führt gegebenenfalls zu der Anzeigeeinheit 5.

Der Bus 3 und die Leitungen 8 bis 11 sind jeweils über eine Anpaß- oder Scnittstellenschaltung 12 an die Recheneinheit 6 angeschlossen. In diesen der Einfachheit halber alle mit 12 bezeichneten Anpaßschaltungen werden in bekannter Weise Pegelumsetzungen, Analog/digital-Wandlungen und dgl. durchgeführt. Bei den Ausgangsleitungen enthalten sie in der Regel eine Treiberschaltung.

Das Datenmodul 4 kann als selbständiges Steuergerät ausgeführt sein, es kann in einen Bordcomputer integriert sein und es kann auch in Form von abgespeicherten Algorithmen in einem beliebigen anderen Steuergerät enthalten sein. Die Stromversorgung erfolgt über die hier nicht dargestellten Klemmen K1.15 oder K1.30 des Bordnetzes. An die Recheneinheit oder Mikrokontroller 6 sind außerdem ein Speicherbaustein 13, z.B. ein EEPROM, und ein Uhrenbaustein 14 angeschlossen.

In dem Datenmodul können neben der bereits erwähnten Ermitlung statistischer Daten auch Daten ermittelt werden, die bei bekannten Bussystemen in einzelnen Steuergeräten ermittelt werden, wie z.B. eine Referenzgeschwindigkeit für eine ABS- oder ASR-Steuerung.

Mögliche Ausgangsdaten des Datenmoduls 4 sind: die Uhrzeit, daß Datum, die Jahreszeit (nummeriert von 1 bis 4), die Außentemperatur, der höhenabhängige Luftdruck, ein Regen- oder Schnee-Erkennungssignal, ein Straßenzustandsignal, ein Fahrererkennungssignal, ein für den Fahrstil des Fahrers charakteristisches Signal (sportlich, wirtschaftlich, verhalten), die Fahr- und Standzeiten in Prozenten, die Fahrzyklen, d.h. die prozentualen Fahranteile auf Autobahnen, Landstraßen und in der Stadt, ein Stauerkennungssignal, Angaben über die gefahrenen Kilometer/Monat, und zwar für den derzeitigen und für vorhergehende Monate, die gemessene maximale Geschwindigkeit, die Durchschnittsgeschwindigkeit, der Durchschnittsverbrauch, die Anzahl Starts/Monat usw.

Die Bereitstellung der Daten auf einem Bussystem mit einem Beispiel eines üblichen Fahrzeug-Busses wird folgendermaßen durchgeführt (Figur 3). Von dem Datenmodul 4 werden auf dem Bus 3 Nachrichten oder Nachrichtenblöcke zyklisch ausgegeben, die jeweils aus zwei bis sechs Bytes bestehen. Das erste Byte oder Wort (= zwei Bytes) 17 enthält einen Sendezyklus-Zähler, der von eins bis zu einer maximalen Anzahl n übertragener Datenwörter durchzählt. Das zweite Byte oder Wort 18 und das (hier nicht dargestellte) dritte Byte oder Wort enthalten die auszugebende Information, d.h. allgemeine oder statistische, von dem Datenmodul aufbereitete Daten. Als Beispiele solcher Daten sind in Figur 3 die bereits erwähnten Uhrzeit- und Datumsangaben, ein Fahrererkennungssignal, die pro Monat gefahrenen Kilometer und ein Stauerkennungssignal angedeutet. Die aus zwei bis sechs Bytes bestehenden Nachrichten werden auch als Nutz-Objekt-Daten bezeichnet.

Bei einem CAN-Bus beträgt die Datenübertragungsgeschwindigkeit z.B. 125 kBaud. Da es sich um Daten handelt, die bezüglich der Übertragungszeit unkritisch sind, genügt eine Sendewiederholzeit von 100 ms. Wird die komplette Datenmenge alle 30 Sekunden übertragen, dann können maximal 300 Nutz-Informationen übertragen werden, da 30 x 1000 ms, /100 ms, = 300 ist.

Für den Bus legt man mit einer sogenannten Kommunikationsmatrix (Figur 4) fest, welches der an den Bus angeschlossenen Geräte welche Daten sendet oder empfängt. Die Kommunikationsmatrix ist hier als Beispiel für drei Geräte dargestellt, wobei das Gerät 3 die statistischen Daten sendet, d.h. das Datenmodul ist.

Ein Gerät bildet zusammen mit den jeweils gesendeten Daten ein sogenanntes Objekt, das Gerät 1 mit den Daten 1.1 bis 1.n somit ein Objekt 1, usw. Jedem Gerät ist ein Identifizierungsmerkmal, ein sogenannter Identifier zugeordnet: dem Gerät 1 der Identifier ID1, dem Gerät 2 der Identifier 2, dem Gerät 3 (Datenmodul 4) der Identifier ID3, usw.

Die gesendeten Daten werden in der Kommunikationsmatrix mit einem kleinen s, die empfangenen Daten mit einem kleinen e dargestellt.

Es gelingt somit, in einer minimalen Anzahl von Speicherzellen des Busses 3 eine maximale Anzahl n von zeitunkritischen Daten allen Busteilnehmern zur Verfügung zu stellen.

Das Übertragen von Eingangssignalen auf dem Bus 3 und das Austauschen von Kommunikationssignalen zwischen den Steuergeräten 3 (z.B. die Motorsteuerung oder die Ventilsteuerung) wird nicht auf dem hier beschriebenen Weg durchgeführt. Solche Signale werden nach bekannten Verfahren mit größerer Übertragungsgeschwindigkeit über den Bus 3 übertragen. Sie beanspruchen erheblich mehr Übertragungskapazität. Andererseits wird durch sie die Übertragungskapazität nicht restlos ausgeschöpft, so daß die zeitunkritischen Daten quasi nebenher übertragen werden können. Nach dem vorstehend beschriebenen Verfahren können allerdings optische oder akustische Überwachungs und Anzeigedaten ausgegeben werden.

## Patentansprüche

1. Bussystem (1), insbesondere in einem Kraftfahrzeug, das einen mehrere Steuergeräte (2) miteinander verbindenden Bus umfaßt und bei dem auf dem Bus übertragene Daten in einer zentralen Einrichtung ausgewertet werden, **dadurch gekennzeichnet**,
- daß die Einrichtung als Datenmodul (4) ausgebildet ist, durch das die auf dem Bus (3) übertragenen Daten ausgelesen und aus ihnen zeitunkritische Informationen erzeugt werden,
- daß diese Informationen als Nachrichten mit geringer Sendewiederholfrequenz über den Bus (3) ausgegeben werden, und
- daß sie von den einzelnen Steuergeräten (2) bei Bedarf dem Bus entnommen werden.

2. Bussystem nach Anspruch 1, dadurch gekennzeichnet, daß in dem Datenmodul (4) von Sensoren (7) in dem Kraftfahrzeug gelieferte Daten ausgewertet werden.

3. Bussystem nach Anspruch 1, dadurch gekennzeichnet, daß in dem Datenmodul (4) Anzeigedaten erzeugt werden, die über eine optische oder akustische Anzeigeeinheit (5) ausgegeben werden.

4. Bussystem nach Anspruch 1, dadurch gekennzeichnet, daß die Nachrichten bestehen aus einem ersten Byte oder Wort, das einen Sendezyklenzähler darstellt, und aus einem bis vier weiteren Bytes, die die bereitzustellende Information enthalten.

5. Bussystem nach Anspruch 1, dadurch gekennzeichnet, daß das Datenmodul (4) Bestandteil eines Bordcomputers ist.

6. Bussystem nach Anspruch 1, dadurch gekennzeichnet, daß die gesamte von dem Datenmodul (4) erzeugte Information jeweils innerhalb einer Zeitspanne von 30 Sekunden über den Bus (3) ausgegeben wird.

## Claims

1. Bus system (1), in particular in a motor vehicle, which comprises a plurality of interconnected control devices (2), and in which data transmitted on the bus are evaluated in a central device, characterized in that
- the device is constructed as a data module (4) by means of which the data transmitted on the bus (3) are read out and non-urgent items of information are generated from them, in that
- these items of information are output via the bus (3) as messages with a low transmission repetition frequency, and in that
- they are extracted from the bus as required by the individual control devices (2).

2. Bus system according to Claim 1, characterized in that data supplied by sensors (7) in the motor vehicle are evaluated in the data module (4).

3. Bus system according to Claim 1, characterized in that display data which are output via an optical or acoustic display unit (5) are generated in the data module (4).

4. Bus system according to Claim 1, characterized in that the messages comprise a first byte or word, which represents a transmission cycle counter, and one to four further bytes, which contain information to be provided.

5. Bus system according to Claim 1, characterized in that the data module (4) is a component of a vehicle computer.

6. Bus system according to Claim 1, characterized in that all the information generated by the data module (4) is output in each case via the bus (3) within a time interval of 30 seconds.

## Revendications

1. Système de bus (1), notamment situé dans un véhicule automobile, qui comprend un bus relié entre plusieurs appareils de commande (2) et dans lequel des données transmises dans le bus sont évaluées dans un dispositif central, caractérisé par le fait
- que le dispositif est réalisé sous la forme d'un module de traitement de données (4), au moyen duquel les données transmises dans le bus (3) sont lues et des informations non critiques, dans le temps, sont produites à partir de ces données,
- que ces informations sont délivrées sous la forme de messages avec une faible fréquence de répétition d'émission par l'intermédiaire du bus (3), et
- qu'elles sont prélevées, le cas échéant, du bus par les différents appareils de commande (2).

2. Système de bus suivant la revendication 1, caractérisé par le fait que des données délivrées par des capteurs (7) situés dans le véhicule automobile sont évaluées dans le module de traitement de données (4).

3. Système de bus suivant la revendication 1, caractérisé par le fait que dans le module de traitement de données (4) sont produites des données d'affichage, qui sont délivrées par l'intermédiaire d'une unité d'affichage optique ou acoustique (5).

4. Système de bus suivant la revendication 1, caractérisé par le fait que les messages sont constitués par un premier octet ou mot, qui représente un compteur de cycles d'émission, et par un à quatre autres octets, qui contiennent l'information devant être fournie.

5. Système de bus suivant la revendication 1, caractérisé par le fait que le module de traitement de données (4) fait partie d'un ordinateur de bord.

6. Système de bus suivant la revendication 1, caractérisé par le fait que la totalité de l'information produite par le module de traitement de données (4) est délivrée respectivement pendant un intervalle de temps de 30 secondes par l'intermédiaire du bus (3).
